# EUROPEAN PATENT APPLICATION

(11) **EP 1 628 188 A1**
(43) Date of publication of application: **22.02.2006**
(21) Application number: 04254907.1
(22) Date of filing: 16.08.2004
(51) Int. Cl.: G06F 1/16

(54) **Keypad and handheld electronic device**

(71) Applicant: Research In Motion Limited, Waterloo, Ontario N2L 3W8 (CA)
(72) Inventor: Griffin, Jason T., Waterloo, Ontario N2T 2J5 (CA); Ladouceur, Norman, Waterloo, Ontario N2T 1A2 (CA)
(74) Representative: Hibbert, Juliet Jane Grace

(57) **Abstract**

An improved keypad (32) and handheld electronic device (4) are optimized for use by the thumbs of a user. The keypad (32) is a reduced keyboard and includes a number of first keys (44), a number of second keys (48) and a number of third keys (52). The first keys are of a first shape (56) that is of an elongated form and is tilted in a first direction (64) relative to a common reference (68). The second keys (48) are of a second shape (72) that is of substantially the same elongated form and is tilted in a second direction (76) relative to the common reference (68). The first shape (56) enables the first keys (44) to be used by one of the thumbs of a user, while the second shape (72) of the second keys (48) enables the second keys to be used by the other thumb of the user. At least some of the third keys (52) are of a merged shape (80) having portions of both the first shape (56) and the second shape (72) in order to enable use by either of the thumbs of the user.

## Description

### BACKGROUND OF THE INVENTION

### Field of the Invention

The invention relates generally to handheld electronic devices and, more particularly, to a handheld electronic device having a keypad that is optimized for use by the thumbs of a user.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices. Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering, for instance, all twenty-six letters of the Roman alphabet, the ten Arabic digits, as well as appropriate punctuation and other symbols.

One way of providing numerous letters in a small space has been to provide a "reduced keyboard" in which multiple letters are assigned to any given key. The keys of a reduced keyboard may also include symbols and/or digits and the like. For example, a touch-tone telephone includes a keypad in the form of a reduced keyboard by providing twelve keys, of which ten have digits thereon, and of these ten keys eight have Roman letters assigned thereto. In order to enable a user to make use of the multiple letters, digits, and the like on any given key of a reduced keyboard, numerous keystroke interpretation systems have been provided. For instance, a "multi-tap" system allows the user to substantially unambiguously specify a particular character on a key by, for instance, pressing the same key a number of times equivalent to the position of the desired character on the key. Another keystroke interpretation system that has been employed is a software-based text disambiguation system that attempts to predict from an actuation of a key what was the input intended by a user.

While previously known keypads and handheld electronic devices have been generally effective for their intended purposes, such devices have not, however, been without limitation. It would be desirable to provide an improved keypad and a handheld electronic device that enable high levels of functionality in a compact design.

### SUMMARY OF THE INVENTION

An improved keypad and handheld electronic device are optimized for use by the thumbs of a user. The keypad is a reduced keyboard and includes a number of first keys, a number of second keys, and a number of third keys. The first keys are of a first shape that is of an elongated form and is tilted in a first direction relative to a common reference. The second keys are of a second shape that is of substantially the same elongated form and is tilted in a second direction relative to the common reference. The first shape enables the first keys to be used by one of the thumbs of a user, while the second shape of the second keys enables the second keys to be used by the other thumb of the user. At least some of the third keys are of a merged shape having portions of both the first shape and the second shape in order to enable use by either of the thumbs of the user.

Accordingly, an aspect of the invention is to provide an improved keypad that is optimized for use with the thumbs of a user.

Another aspect of the invention is to provide an improved keypad having a number of first keys of a first shape, a number of second keys of a second shape, and a number of third keys of a merged shape, with the merged shape including portions of the first shape and the second shape.

Another aspect of the invention is to provide an improved keypad in the form of a reduced QWERTY keyboard.

Another aspect of the invention is to provide an improved handheld electronic device having a keypad in the form of a reduced keyboard that is optimized for use by the thumbs of a user, and further having a disambiguation routine that disambiguates ambiguous keypad entries.

Another aspect of the invention is to provide an improved handheld electronic device having a keypad that is optimized for use by the thumbs of a user, with the keypad including a number of keys that are optimized for use by one of the thumbs of the user, a number of keys that are optimized for use by the other of the thumbs of the user, and a number of the keys that are optimized for use by either of the thumbs.

Accordingly, an aspect of the invention is to provide an improved keypad for a handheld electronic device, with the keypad being adapted for use with the thumbs of user. The general nature of the keypad can be stated as comprising a number of first keys, a number of second keys, and a number of third keys. Each first key of at least a portion of the number of first keys is of a first shape, with the first shape being of a first elongated form and being tilted in a first direction relative to a common reference. Each second key of at least a portion of the number of second keys is of a second shape, with the second shape being of a second elongated form and being tilted in a second direction relative to the common reference. The first and second directions are different than one another. Each third key of at least a portion of the number of third keys is of a merged shape. The merged shape comprises a first portion having a shape that comprises a substantial portion of the first shape and a second portion having a shape that comprises a substantial portion of the second shape.

Another aspect of the invention is to provide an improved handheld electronic device adapted for use with the thumbs of a user. The general nature of the handheld electronic device can be stated as comprising a display, an input apparatus comprising a keypad, and a processor apparatus. The processor apparatus comprises a memory and is adapted to detect input from the input apparatus and to provide output signals to the display. The keypad can be generally stated as comprising a number of first keys, a number of second keys, and a number of third keys. Each first key of at least a portion of the number of first keys is of a first shape, with the first shape being of a first elongated form and being tilted in a first direction relative to a common reference. Each second key of at least a portion of the number of second keys is of a second shape, with the second shape being of a second elongated form and being tilted in a second direction relative to the common reference. The first and second directions are different than one another. Each third key of at least a portion of the number of third keys is of a merged shape. The merged shape comprises a first portion having a shape that comprises a substantial portion of the first shape and a second portion having a shape that comprises a substantial portion of the second shape.

### BRIEF DESCRIPTION OF THE DRAWINGS

A full understanding of the invention can be gained from the following Description of the Preferred Embodiments when read in conjunction with the accompanying drawings in which:

Fig. 1 is a perspective view of an improved handheld electronic device in accordance with the invention that includes an improved keypad in accordance with the invention;

Fig. 2 is a top plan view of the improved handheld electronic device and keypad of Fig. 1;

Fig. 3 is a schematic top plan view of the keypad of Fig. 2;

Fig. 3A is a schematic view of the improved handheld electronic device of Fig. 1;

Fig. 3B is an enlarged view of a portion of Fig. 3;

Fig. 3C is an enlarged view of another portion of Fig. 3;

Fig. 4 is a perspective view of another improved handheld electronic device in accordance with the invention that includes another keypad in accordance with the invention; and

Fig. 5 is a top plan view of the handheld electronic device and keypad of Fig. 4.

Similar numerals refer to similar parts throughout the specification.

### DESCRIPTION OF THE PREFERRED EMBODIMENTS

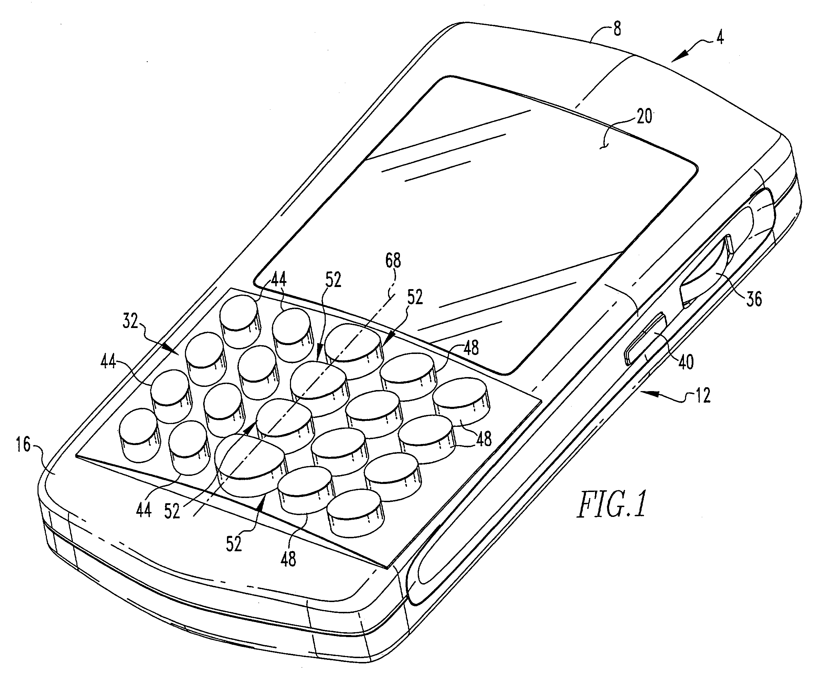

An improved handheld electronic device 4 in accordance with a first embodiment of the invention is indicated generally in Figs. 1, 2, and 3A. The exemplary handheld electronic device 4 includes a housing 8 upon which are disposed an input apparatus 12, a processor apparatus 16, and a display 20. The processor apparatus 16 includes a processor 22 that may be, for instance, and without limitation, a microprocessor (µP), that is responsive to inputs from the input apparatus 12 and provides output signals to the display 20. The processor apparatus 16 additionally includes a memory 24 having a routine 28 stored therein. The processor 22 interfaces with the memory 24 and executes the routine 28 which may include, for instance, and without limitation, a disambiguation routine. Such a disambiguation routine may be adapted to, for instance, responsive to an actuation by a user of a key having a plurality of characters assigned thereto, output to the display 20 a character of the plurality of characters assigned to the key that is predicted to be the character intended by the user. Examples of handheld electronic devices are included in, for instance, U.S. Patent Nos. 6,452,588 and 6,489,950, which are incorporated by reference herein.

The input apparatus 12 includes a keypad 32, a track wheel 36, and an <ESCAPE> key 40. The exemplary keypad 32 includes a number of first keys 44 disposed at one side of a common reference 68, a number of second keys 48 disposed at an opposite side of the common reference 68, and a number of third keys 52 that are coincident with the common reference 68. As used herein, the expression "a number of" and variations thereof shall refer broadly to any nonzero quantity, including a quantity of one. Also, as used herein the expression "coincident" and variations thereof shall refer broadly to a situation in which one thing at least partially overlies or at least partially occupies the same space as another thing, such as if the one thing were disposed at least partially on or at least partially overlapped the another thing. While the third keys 52 are shown as being substantially centered with respect to the common reference 68, it is understood that in other embodiments of the handheld electronic device and the keypad that the third keys potentially could be non-centered on the common reference while still being coincident with the common reference.

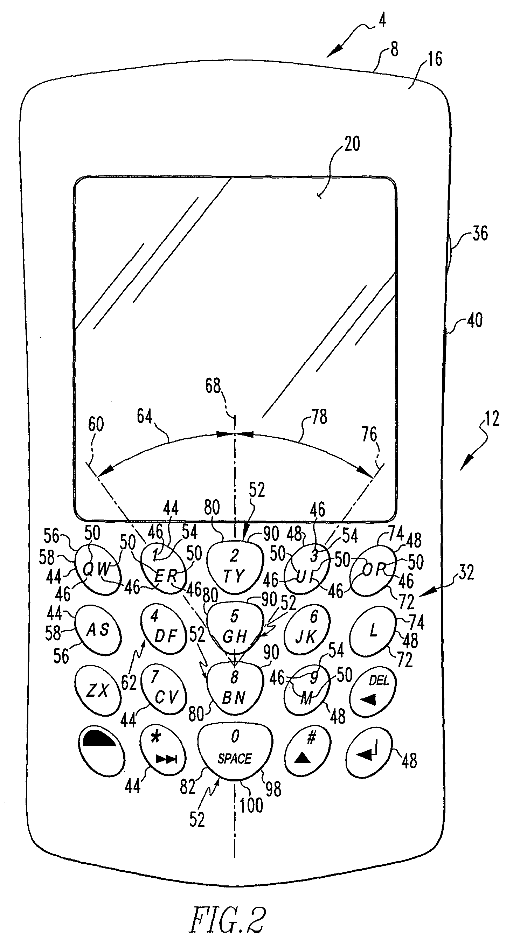

The exemplary keypad 32 includes a number of characters 46 (Fig. 2) that are assigned to many of the first keys 44, second keys 48, and third keys 52. In the depicted exemplary embodiment the characters 46 include Roman letters 50 that are in a QWERTY configuration and, more particularly, are substantially of a reduced QWERTY configuration. The characters 46 include the Roman letters 50, and further include Arabic digits 54. The first keys 44, the second keys 48, and the third keys 52 each generally have, at most, two Roman letters 50 and one Arabic digit 54 assigned thereto. It is understood, however, that any of the first keys 44, the second keys 48, and the third keys 52 can have a different arrangement of characters 46, a different quantity of characters 46, or may contain no characters 46. Additionally, the first keys 44, the second keys 48, and the third keys 52 may include appropriate punctuation symbols and other symbols that are not expressly depicted herein. While the keypad 32 is of a reduced QWERTY configuration, it is understood that in other embodiments the keypad could be of other layouts, such as a DVORAK layout or other layouts without departing from the concept of the invention.

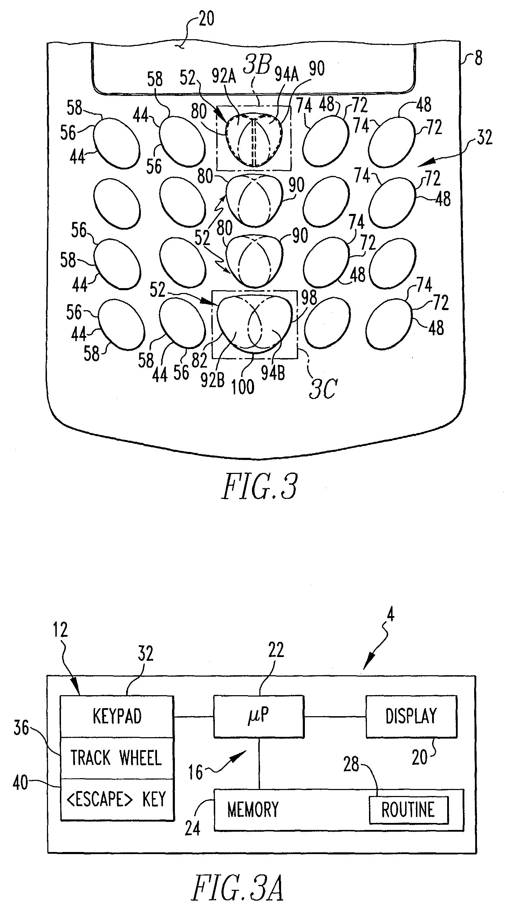

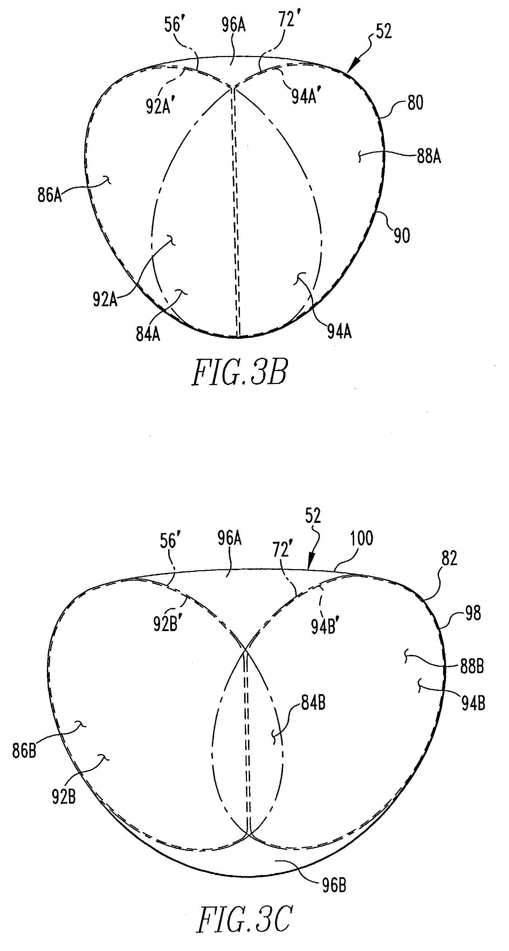

As can be understood from Figs. 2 and 3, the first keys 44 are generally each of a first shape 56. The first shape 56 is of an elongated form that is tilted with respect to the common reference 68. Specifically, the elongated form is a first elongated form that is elongated along a first elongation axis 60 that is oriented at a first angle 64 in a first direction with respect to the common reference 68. In the depicted exemplary embodiment, the first elongated form is an oval form, such as would broadly include oblong circle and elliptical forms. The first elongated form can be of other forms such as, for example and without limitation, non-oval forms, partially oval forms, polygonal forms, partially polygonal forms, and other forms without departing from the concept of the invention. The first shape 56 includes a first perimeter 58.

The second keys 48 are generally each of a second shape 72. The second shape 72 is of an elongated form that is tilted with respect to the common reference 68. The elongated form of the second shape 72 is a second elongated form that is elongated along a second elongation axis 76 that is tilted at a second angle 78 with respect to the common reference 68. In the depicted exemplary embodiment, the direction in which the first elongation axis 60 is tilted with respect to the common reference 68 is different than and is generally opposite the direction in which the second elongation axis 76 is tilted with respect to the common reference 68. It is understood, however, that different relationships of direction of tilting with respect to a common reference are possible in other embodiments without departing from the concept of the invention. The second shape 72 has a second perimeter 74.

In the depicted exemplary embodiment, the first elongated form is substantially the same as the second elongated form, except tilted in a different direction. In other embodiments, however, the first and second elongated forms may be different than one another without departing from the concept of the invention.

In the depicted exemplary embodiment, the first angle 64 and the second angle 78 are of substantially equal magnitude. It is understood, however, that different angular relationships may be employed without departing from the concept of the invention. It is also noted that the first keys 44 need not be identically aligned with one another, and that the second keys 48 similarly need not be identically aligned with one another. The exemplary first elongation axis 60 and exemplary second elongation axis 76 are depicted in Fig. 2 as being of a particular first key 44 and of a particular second key 48 that are disposed adjacent and at opposite sides of a given third key 52 that is centered on the common reference 68. The other first keys 44 may have an elongation axis that is either parallel with or non-parallel with the first elongation axis 60 depicted in Fig. 2. Similarly, the other second keys 48 may have a second elongation axis that is either parallel with or non-parallel with the second elongation axis 76 of Fig. 2.

The third keys 52 of the depicted exemplary embodiment are of a merged shape. More particularly, some of the third keys 52 are of a first merged shape 80 (Fig. 2), and another of the third keys 52 is of a second merged shape 82. The second merged shape 82 is relatively larger than the first merged shape 80, and in the depicted exemplary embodiment the third key 52 having the second merged shape 82 is also a <SPACE> key 100.

As can be understood from Fig. 3 and 3B, the first merged shape 80 is configured to include at least a portion of the first shape 56, which is depicted at the broken line 56' superimposed over the first merged shape 80, and at least a portion of the second shape 72, which is shown at the broken 72' superimposed over the first merged shape 80. The first shape 56' and the second shape 72' are at least partially overlapped. Specifically, the first merged shape 80 can be said to include an overlapped region 84A where the first shape 56' and the second shape 72' overlap one another, a first non-overlapped region 86A, and a second non-overlapped region 88A. The first non-overlapped region 86A is represented by a portion of the first shape 56' that is not overlapped by the second shape 72', and the second non-overlapped region 88A is a portion of the second shape 72' that is not overlapped by the first shape 56'.

The first merged shape 80 can be said to include a first portion 92A, a second portion 94A, and a filler portion 96. The first portion 92A is generally depicted in Fig. 3B by the dashed line 92A', and the second portion is similarly depicted by the dashed line 94A'. The filler portion 96 extends between the first non-overlapped region 86A and the second non-overlapped region 88A and provides the first merged shape 80 with a relatively aesthetically appealing and complete first merged perimeter 90. Portions of the dashed lines 92A' and 94A' are depicted solely for purposes of clarity of illustration as being spaced slightly from the first merged perimeter 90 and from one another, it being understood that such spacing does not actually exist in the device 4. It is also understood that the dashed lines 92A' and 94A' do not represent hidden features, but rather are shown as dashed lines in order to distinguish them from the broken lines 56' and 72'. In this regard, it is understood that at certain regions of the first merged shape 80 the broken line 56', the dashed line 92A', and the first merged perimeter 90 are actually superimposed over one another, and that at other regions of the first merged shape 80 the broken line 56' and the dashed line 92A' are actually superimposed over one another. Similarly, at certain regions of the first merged shape 80 the broken line 72', the dashed line 94A', and the first merged perimeter 90 are actually superimposed over one another, and that at other regions of the first merged shape 80 the broken line 72' and the dashed line 92A' are actually superimposed over one another.

The first portion 92A is of a shape that includes a substantial portion of the first shape 56, and the second portion 94A is of a shape that includes a substantial portion of the second shape 72. In such context, the expression "a substantial portion of" and variations thereof shall refer broadly to a non-insignificant portion of something such as might be, for instance and without limitation, at least about 20% of the something. The first merged shape 80 and the second merged shape 82 are each of a size that is at least as large as the first shape 56 and the second shape 72 at least partially overlapped. In this regard, it is understood that the first shape 56, the second shape 72, the first merged shape 80, and the second merged shape 82 are shapes that are defined with respect to the common reference 68.

In the exemplary embodiment depicted herein, the first merged perimeter 90 includes about one-half of the first perimeter 58 and about one-half of the second perimeter 74. It is understood, however, that in other embodiments the first merged perimeter might include, for example, only about one-third of each of the first perimeter and the second perimeter, and other compositions of the first merged perimeter are possible without departing from the concept of the invention.

As can be seen in Fig. 3C, the <SPACE> key 100 is of the second merged shape 82 which includes at least a portion of the first shape 56, which is depicted at the numeral 56' superimposed over the second merged shape 82, and at least a portion of the second shape 72, which is shown at the numeral 72' superimposed over the second merged shape 82. The first shape 56' and the second shape 72' are at least partially overlapped. The second merged shape 82 thus includes an overlapped region 84B, a first non-overlapped region 86B, and a second non-overlapped region 88B in a fashion similar to that of the first merged shape 80, but is slightly different in order to provide the <SPACE> key 100 with a second merged perimeter 98 and a slightly larger key. The second merged shape 82 includes a first portion 92B depicted by the broken line 92B' and further includes a second portion 94B depicted by the broken line 94B'. The second merged shape 82 additionally includes a pair of filler portions 96A and 96B to complete the second merged perimeter 98 in an aesthetically pleasing manner and in a way that results in the second merged shape 82 being relatively larger than the first merged shape 80.

As can be understood from Fig. 3, when the handheld electronic device 4 is held in the hands of a user, the first keys 44 are generally optimized for use, i.e., actuation, by the user's left thumb. Similarly, the second keys 48 are generally optimized for use with the user's right thumb. The third keys 52, being provided with either the first merged shape 80 or the second merged shape 82, are generally optimized for use by either of the two thumbs of the user. In this regard, it is noted that the third keys 52 are coincident with the common reference 68, and that the common reference 68 is generally centrally disposed on the housing 8. The third keys 52 thus advantageously can be used by either the left thumb or the right thumb, which provides enhanced versatility to the handheld electronic device 4. The first merged shape 80 and the second merged shape 82 each provide a first portion 92A, 92B adjacent one of the first keys 44, and further provide a second portion 94A, 94B adjacent one of the second keys 48.

In the depicted exemplary embodiment, the elongated form of the first shape 56 is symmetric about the first elongation 60, and the elongated form of the second shape 72 is similarly symmetric about the second elongation axis 76. It is understood that the first shape 56 and the second shape 72 can have elongated forms different than one another without departing from the concept of the invention. Alternatively, or in addition thereto, the elongated form of the first shape 56 and/or the second shape 72 can be asymmetric with respect to the first elongation axis 60 and the second elongation axis 76, respectively, without departing from the concept of the invention.

As can be understood from Fig. 2, certain of the first keys 44, second keys 48, and third keys 52 together make up a telephone keypad 62 by having assigned thereto the characters 46, specifically the Arabic digits 54, "0" through "9" arranged in the layout of a conventional touch-tone telephone keypad. Specifically, the digit "2" is assigned to a first one of the third keys 52 which, in the depicted embodiment, is the third key 52 that is disposed adjacent the display 20. The digit "5" is assigned to a second one of the third keys 52 adjacent the third key 52 to which is assigned the digit "2". The digit "8" is assigned to a third one of the third keys 52 disposed adjacent the third key 52 having the digit "5" assigned thereto. The digit "0" is assigned to a fourth one of the third keys 52 which, in the depicted embodiment, is the <SPACE> key 100. The digits "2", "5", "8", and "0" are assigned to sequentially arranged third keys 52 that are coincident with the common reference 68.

As can further be seen from Fig. 2, the digit "1" is assigned to the first key 44 disposed adjacent the third key 52 to which the digit "2" is assigned, and the digit "3" is assigned to the second key 48 disposed adjacent the same third key 52. The digits "4" and "6" are assigned to the first key 44 and the second key 48, respectively, disposed adjacent the third keys 52 to which the digit "5" is assigned. The digits "7" and "9" are assigned to the first key 44 and the second key 48, respectively, disposed adjacent the third key 52 to which the digit "8" is assigned.

By providing the digits "2", "5", "8", and "0" on sequentially arranged third keys 52 that are visually distinct from the first keys 44 and the second keys 48, and that are coincident with the common reference 68, a user can easily identify the central column of the telephone keypad 62. The telephone keypad 62 can thus be identified and used with relatively less visual attention from the user. This is particularly useful since the first keys 44, the second keys 48, and the third keys 52 generally each include a plurality of the characters 46 assigned thereto, and the specific location of the telephone keypad 62 might otherwise be difficult without carefully viewing the keypad 32 to identify the keys bearing the Arabic digits 54. The ability to quickly discern the location of the telephone keypad 62 facilitates dialing of a telephone number using the telephone keypad 62. The enhanced ability to quickly identify the telephone keypad 62 is facilitated by centering the telephone keypad 62 on keys which are of a visually distinct configuration within the keypad 32.

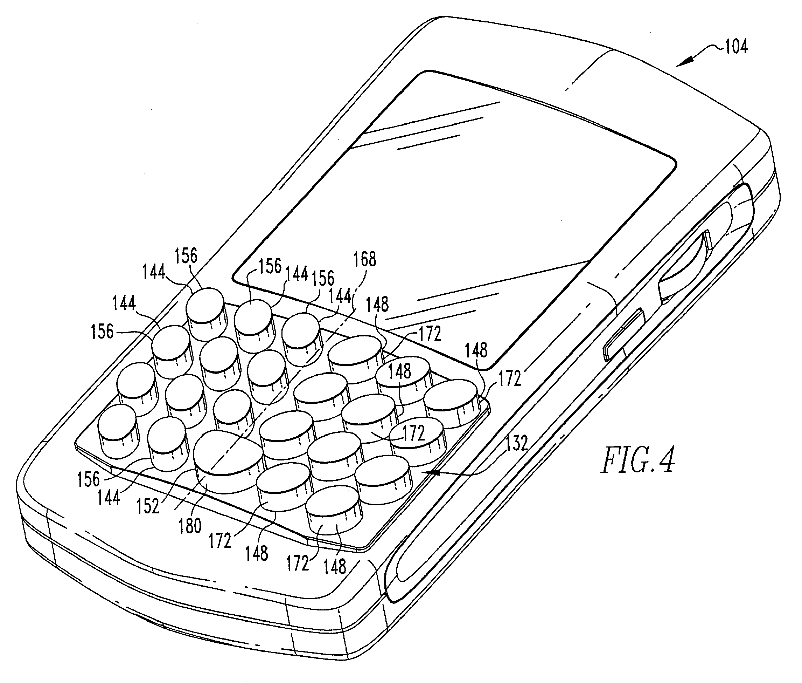

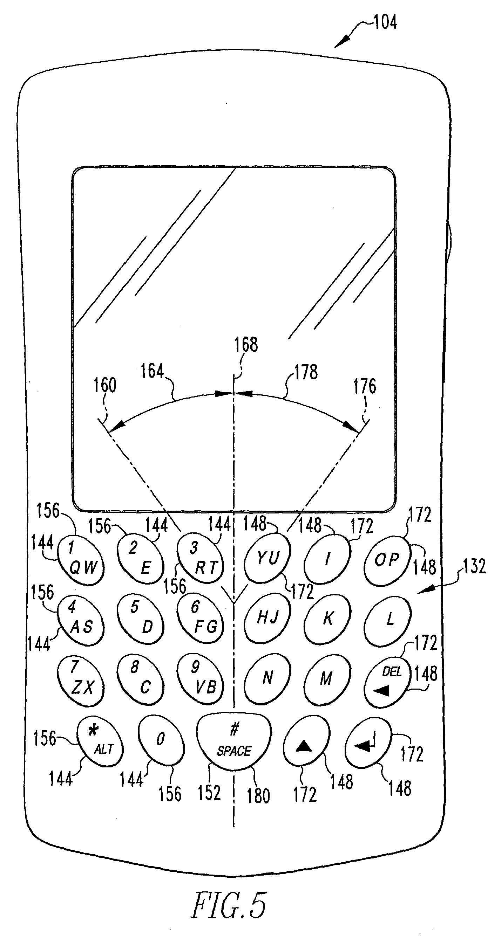

A handheld electronic device 104 in accordance with a second embodiment of the invention is indicated generally in Figs. 4 and 5. The device 104 is similar to the device 4 in that it includes a keypad 132 having a plurality of first keys 144 and a plurality of second keys 148, but the device 104 includes only a single third key 152. The third key 152 also functions as a <SPACE> key and is coincident with the common reference 168. The first keys 144 are of a first shape 156 having an elongated form that is elongated along a first elongated axis 160 that is tilted at a first angle 164 in a first direction with respect to the common reference 168. The second keys 148 are of a second shape 172 that is of the same elongated form as the first shape 152 and that is elongated along a second elongation axis 176 that is tilted at a second angle 178 in a second direction with respect to the common reference 168. The third key 152 is of a merged shape 182.

The keypad 32 of the device 4 includes five columns of keys, i.e., the third keys 52 are coincident with the common reference 68, the first keys 44 are aligned in two columns generally parallel with the common reference 68, and the second keys 48 are similarly aligned in two columns generally parallel with the common reference 68. The third keys 52, being coincident with the common reference 68, are intended for use by either of the thumbs of a user.

In contrast, most of the first keys 144 of the keypad 132 are arranged in three columns that are generally parallel with the common reference 168, and most of the second keys 148 are similarly arranged in three columns that are generally parallel with the common reference 168. The keypad 132 provides only a single third key 152 that is coincident with the common reference 168 and that is intended for use by either of the thumbs of a user. The keypad 132 provides a relatively greater quantity of first keys 144 and second keys 148 than the keypad 32, it being understood, however, that the relatively greater number of keys potentially can require the keys to be relatively smaller and/or spaced relatively closer together than the keys of the keypad 32. However, the keypad 132 is still optimized for use by the thumbs of the user and still includes at least one key, i.e., the third key 152, that is intended for use by either of the thumbs of a user. In this regard, the merged shape 182 is configured to include at least a portion of the first shape 156 and a portion of the second shape 172, and also includes an appropriate filler portion. The keypad 132 thus is of a different configuration than the keypad 32 yet is of a reduced configuration and that is optimized for use by the thumbs of a user.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A keypad for a handheld electronic device, the keypad being adapted for use with the thumbs of user, the keypad comprising:
a number of first keys;
a number of second keys;
a number of third keys;
each first key of at least a portion of the number of first keys being of a first shape, the first shape being of a first elongated form and being tilted in a first direction relative to a common reference;
each second key of at least a portion of the number of second keys being of a second shape, the second shape being of a second elongated form and being tilted in a second direction relative to the common reference;
the first and second directions being different than one another; and
each third key of at least a portion of the number of third keys being of a merged shape, the merged shape comprising a first portion having a shape that comprises a substantial portion of the first shape and a second portion having a shape that comprises a substantial portion of the second shape.

2. The keypad of Claim 1 wherein the first shape is the first elongated form tilted in the first direction at a first angle relative to the common reference, the second shape being the second elongated form tilted in the second direction at a second angle relative to the common reference, the first angle and the second angle being of substantially equal magnitude.

3. The keypad of Claim 1 wherein at least one of the first elongated form and the second elongated form is an oval form.

4. The keypad of Claim 1 wherein at least a portion of at least one of the third keys of the at least a portion of the number of third keys has a shape corresponding with the first shape and the second shape being at least partially overlapped.

5. The keypad of Claim 4 wherein at least a portion of the at least one of the third keys has a shape corresponding with a filler portion extending between a non-overlapped portion of the first shape and a non-overlapped portion of the second shape.

6. The keypad of Claim 1 wherein each first key of at least a portion of the number of first keys, each second key of at least a portion of the number of second keys, and each third key of at least a portion of the number of third keys has a plurality of characters assigned thereto.

7. The keypad of Claim 6 wherein the characters comprise letters that are arranged in a substantially QWERTY configuration.

8. The keypad of Claim 6 wherein the characters comprise the digit "2" being assigned to a first one of the third keys of the number of third keys, the digit "5" being assigned to a second one of the third keys of the number of third keys, the digit "8" being assigned to a third one of the third keys of the number of third keys, and the digit "0" being assigned to a fourth one of the third keys of the number of third keys.

9. The keypad of Claim 8 wherein the first one of the third keys, the second one of the third keys, the third one of the third keys, and the fourth one of the third keys are sequentially arranged coincident with the common reference.

10. A handheld electronic device adapted for use with the thumbs of a user, the handheld electronic device comprising:
a display;
an input apparatus comprising a keypad;
a processor apparatus comprising a memory, said processor apparatus being adapted to detect input from the input apparatus and to provide output signals to the display;
the keypad comprising a number of first keys, a number of second keys, and a number of third keys;
each first key of at least a portion of the number of first keys being of a first shape, the first shape being of a first elongated form and being tilted in a first direction relative to a common reference;
each second key of at least a portion of the number of second keys being of a second shape, the second shape being of a second elongated form and being tilted in a second direction relative to the common reference;
the first and second directions being different than one another; and
each third key of at least a portion of the number of third keys being of a merged shape, the merged shape comprising a first portion having a shape that comprises a substantial portion of the first shape and a second portion having a shape that comprises a substantial portion of the second shape.

11. The handheld electronic device of Claim 10 wherein the first shape is the first elongated form tilted in the first direction at a first angle relative to the common reference, the second shape being the second elongated form tilted in the second direction at a second angle relative to the common reference, the first angle and the second angle being of substantially equal magnitude.

12. The handheld electronic device of Claim 10 wherein at least one of the first elongated form and the second elongated form is an oval form.

13. The handheld electronic device of Claim 10 wherein at least a portion of at least one of the third keys of the at least a portion of the number of third keys has a shape corresponding with the first shape and the second shape being at least partially overlapped.

14. The handheld electronic device of Claim 10 wherein each first key of at least a portion of the number of first keys, each second key of at least a portion of the number of second keys, and each third key of at least a portion of the number of third keys has a plurality of characters assigned thereto.

15. The handheld electronic device of Claim 14 wherein the characters comprise letters that are arranged in a substantially QWERTY configuration.

16. The handheld electronic device of Claim 14 wherein the characters comprise the digit "2" being assigned to a first one of the third keys of the number of third keys, the digit "5" being assigned to a second one of the third keys of the number of third keys, the digit "8" being assigned to a third one of the third keys of the number of third keys, and the digit "0" being assigned to a fourth one of the third keys of the number of third keys.

17. The handheld electronic device of Claim 16 wherein the first one of the third keys, the second one of the third keys, the third one of the third keys, and the fourth one of the third keys are sequentially arranged coincident with the common reference.

18. The handheld electronic device of Claim 14 wherein the processor apparatus comprises a disambiguation routine adapted to, responsive to an actuation by a user of a third key of said at least a portion of the number of third keys having a plurality of characters assigned thereto, output to the display a character of the plurality of characters assigned to said third key that is predicted to be the character intended by the user.

19. The handheld electronic device of Claim 18 wherein the characters comprise letters arranged in substantially a QWERTY configuration, and wherein the disambiguation routine enables the entry of text into the handheld electronic device.

20. The handheld electronic device of Claim 10 wherein the merged shape is at least as large as the first shape and the second shape overlapped with one another.

## Amended claims

### Amended claims in accordance with Rule 86(2) EPC.

**1.** A keypad (32) for a handheld electronic device (14), the keypad comprising:
a number of first keys (44);
a number of second keys (48);
a number of third keys (52);
each first key of at least a portion of the number of first keys being of a first shape (56), the first shape being of a first elongated form and being tilted in a first direction relative to a common reference (68);
each second key of at least a portion of the number of second keys being of a second shape, the second shape being of a second elongated form and being tilted in a second direction relative to the common reference;
the first and second directions being different than one another; and
each third key of at least a portion of the number of third keys being of a merged shape (80, 82), the merged shape comprising a first portion (92a) having a shape that comprises a substantial portion of the first shape and a second portion (94a) having a shape that comprises a substantial portion of the second shape.

**2.** The keypad of Claim 1 wherein the first shape is the first elongated form tilted in the first direction at a first angle (64) relative to the common reference, the second shape being the second elongated form tilted in the second direction at a second angle (78) relative to the common reference, the first angle and the second angle being of substantially equal magnitude.

**3.** The keypad of Claim 1 wherein at least one of the first elongated form and the second elongated form is an oval form.

**4.** The keypad of Claim 1 wherein at least a portion of at least one of the third keys of the at least a portion of the number of third keys has a shape corresponding with the first shape and the second shape being at least partially overlapped.

**5.** The keypad of Claim 4 wherein at least a portion of the at least one of the third keys has a shape corresponding with a filler portion extending between a non-overlapped portion of the first shape and a non-overlapped portion of the second shape.

**6.** The keypad of Claim 1 wherein each first key of at least a portion of the number of first keys, each second key of at least a portion of the number of second keys, and each third key of at least a portion of the number of third keys has a plurality of characters assigned (46) thereto.

**7.** The keypad of Claim 6 wherein the characters comprise letters (50) that are arranged in a QWERTY configuration.

**8.** The keypad of Claim 6 wherein the characters comprise the digit "2" being assigned to a first one of the third keys of the number of third keys, the digit "5" being assigned to a second one of the third keys of the number of third keys, the digit "8" being assigned to a third one of the third keys of the number of third keys, and the digit "0" being assigned to a fourth one of the third keys of the number of third keys.

**9.** The keypad of Claim 8 wherein the first one of the third keys, the second one of the third keys, the third one of the third keys, and the fourth one of the third keys are sequentially arranged coincident with the common reference.

**10.** A handheld electronic device comprising:
a display (20);
an input apparatus comprising a keypad according to any preceding claim; and
a processor apparatus (16) comprising a memory (24), said processor apparatus being adapted to detect input from the input apparatus and to provide output signals to the display.

**11.** The handheld electronic device of Claim 10 wherein the processor apparatus comprises a disambiguation routine adapted to, responsive to an actuation by a user of a third key of said at least a portion of the number of third keys having a plurality of characters assigned thereto, output to the display a character of the plurality of characters assigned to said third key that is predicted to be the character intended by the user.

**12.** The handheld electronic device of Claim 11 wherein the characters comprise letters arranged in a QWERTY configuration, and wherein the disambiguation routine enables the entry of text into the handheld electronic device

**13.** The handheld electronic device of Claim 10 wherein the merged shape is at least as large as the first shape and the second shape overlapped with one another.
